# EUROPÄISCHE PATENTSCHRIFT

(11) **EP 1 983 068 B1**
(45) Veröffentlichungstag und Bekanntmachung des Hinweises auf die Patenterteilung: **25.06.2014**
(21) Anmeldenummer: 08007408.1
(22) Anmeldetag: 16.04.2008
(51) Int. Cl.: C22C 18/04, C23C 30/00, E01F 8/02, E04C 5/04, B32B 15/01, B21F 27/00, E04F 13/12, E02D 29/02

(54) **Drahtgitter, insbesondere für Drahtkörbe**
Wire mesh, in particular for wire baskets
Treillis de fils, en particulier pour corbeilles en fils métalliques

(30) Priorität: 19.04.2007 DE 202007006168 U
(43) Veröffentlichungstag der Anmeldung: 22.10.2008
(73) Patentinhaber: Rothfuss, Thomas, 71735 Eberdingen (DE)
(72) Erfinder: Beckert, Manfred, 75417 Mühlacker (DE)
(74) Vertreter: Jackisch-Kohl, Anna-Katharina

(56) Entgegenhaltungen:
- EP-A1- 1 158 069
- EP-A1- 1 557 478
- WO-A1-2006/002843
- DE-U1-202006 004 462

## Beschreibung

Die Erfindung betrifft ein Drahtgitter nach dem Oberbegriff des Anspruches 1.

Aus Drahtgittern werden Drahtkörbe hergestellt, die als Gabionen bekannt sind und zur Sicherung von Böschungen, zur Errichtung von Lärmschutzwänden und dergleichen herangezogen werden. Die Drahtkörbe werden je nach Einsatzfall mit Steinen, Schotter, Lavasteinen, Erde und dergleichen gefüllt. Die für die Drahtkörbe eingesetzten Gitterdrähte haben einen Stahlkern, der beschichtet ist. Die Gitterdrähte werden einander kreuzend an den Kreuzungsstellen miteinander verschweißt. Da die Drahtkörbe sich in der Regel im Freien befinden, sind sie den Umweltbedingungen ausgesetzt, wie saure Luft, Streusalz und dergleichen. Um die Korrosion zu verhindern bzw. weitgehend auszuschließen, wird für die Beschichtung des Stahlkerns der Gitterdrähte eine Galfan-Legierung eingesetzt. Sie besteht aus einer eutektischen Legierung von Zink und Aluminium, wobei das Aluminium 5 Gew.-% und das Zink 95 Gew.-% ausmacht. Aufgrund von Diffusionsvorgängen diffundiert Eisen aus dem Stahlkern in die Beschichtung ein, wobei der Eisenanteil zwischen etwa 4 bis 11 Gew.-% betragen kann. Aluminium ist vorwiegend in Bereichen mit hohem Eisengehalt aufzufinden, wobei bis zu 37 Gew.-% Aluminium erreicht werden. Außerhalb dieses Eisen-Aluminium-Diffusionsbereiches liegt der Aluminiumgehalt in der Beschichtung zwischen etwa 6 bis 16 Gew.-%. Im Bereich der Eisendiffusionszone liegt der Zinkanteil der Beschichtung nur bei etwa 29 bis 50 Gew.-%, während er in den äußeren Schichtbereichen zwischen 70 und 90 Gew.-% beträgt. Mit der Galfan-Beschichtung wird bereits eine hohe Korrosionsfestigkeit erreicht.

Bei dem bekannten Drahtgitter (EP 1 158 069 A1) wird ein Gitterdraht verwendet, dessen Stahlkern mit einer Legierung beschichtet ist. Sie enthält Aluminium in einem Bereich von 4 bis 20 Gew.-%, Magnesium im Bereich von 0,8 bis 5 Gew.-% und den Rest Zink. Bei einem nicht näher angegebenen Salzsprühtest tritt In 250 Stunden ein Massenverlust auf.

Es ist weiter bekannt (EP 1 557 478 A1), Stahlbleche als Baumaterialien mit einer Beschichtung zu versehen, die außer Zink, Aluminium und Magnesium zumindest noch Titan aufweist.

Es sind schließlich Drahtgitter bekannt (DE 20 2006 004 462 A1), aus denen Gabionen hergestellt werden. Die Drahtgitter werden aus einem Stahldraht hergestellt, der mit einer Beschichtung aus einem Zink-Aluminium-Gemisch mit einem Masseanteil Aluminium von 6 % bis 16 % und einem Masseanteil Zink von 94 % bis 84 % und additiv 1 % bis 2 % Magnesium enthält. Bei einem Salzsprühnebeltest gemäß DIN 50 021 SS wird eine Standzeit von 2520 Stunden erreicht.

Der Erfindung liegt die Aufgabe zugrunde, das gattungsgemäße Drahtgitter so auszubilden, dass es einen hohen Korrosionsschutz aufweist, langzeitbeständig ist und eine hohe Resistenz gegen Säuren und Laugen aufweist. Dabei sollen auch die Bereiche des Gitterdrahtes, an denen geschweißt wird, korrosionsbeständig sein.

Diese Aufgabe wird beim gattungsgemäßen Drahtgitter erfindungsgemäß mit den kennzeichnenden Merkmalen des Anspruches 1 gelöst.

Beim erfindungsgemäßen Drahtgitter hat der Gitterdraht eine Beschichtung, die aus einer Legierung besteht, die aus Zink, Aluminium und Magnesium besteht. Der Zinkanteil liegt zwischen 91 und 98 Gew.-%, der Aluminiumanteil zwischen 5 und 1 Gew.-% und der Magnesiumanteil zwischen 0,1 und 4 Gew.-%. Die Beschichtung zeichnet sich dadurch aus, dass sie einen hohen Korrosionsschutz gewährleistet. Die Standzeit des Gitterdrahtes sowie des Drahtgitters bei einem Salzsprühnebeltest nach DIN 50 021 SS liegt bei mehr als 3000 Stunden. Beispielsweise Drahtkörbe, die aus den Gitterdrähten bzw. Drahtgittern hergestellt sind, sind darum hervorragend für den Außeneinsatz auch unter schwierigen Außenbedingungen geeignet. Die Legierungszusammensetzung gewährleistet eine hohe Resistenz gegen Säuren und Laugen. Besonders vorteilhaft ist, dass durch diese Legierungszusammensetzung auch die geschweißten Stellen des Gitterdrahtes, beispielsweise die Kreuzungspunkte im Drahtgitter, vor Korrosion hervorragend geschützt sind. Aufgrund der erfindungsgemäßen Ausbildung ist die Beschichtung des Stahlkerns ausreichend biegbar, so dass der Gitterdraht problemlos gebogen werden kann, ohne dass die Gefahr besteht, dass hierbei die Beschichtung reißt oder gar abspringt. Dadurch lassen sich an den Enden des Gitterdrahtes problemlos Ösen biegen oder Schlaufen formen, über die in einem Drahtkorb die einzelnen Drahtgitter miteinander verbunden werden können.

Weitere Merkmale der Erfindung ergeben sich aus den weiteren Ansprüchen, der Beschreibung und der Zeichnung.

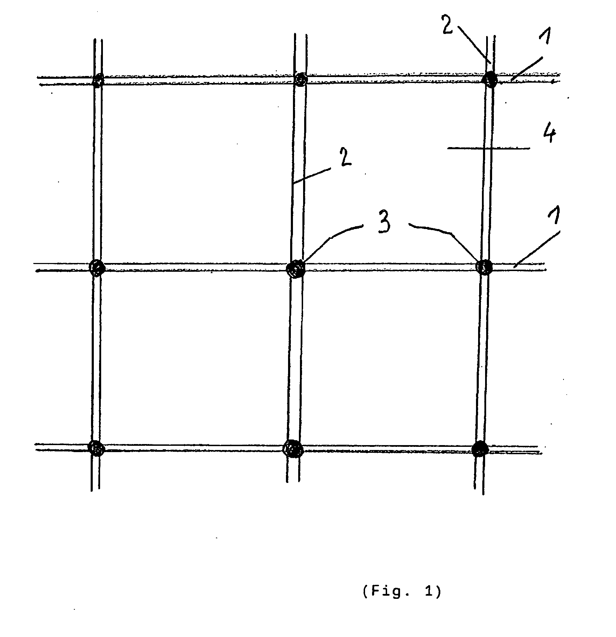

Die Erfindung wird anhand eines in Fig. 1 dargestellten Ausführungsbeispieles näher erläutert. Fig. 1 zeigt schematisch ein Drahtgitter, das für Gabionen verwendet werden kann. Das Drahtgitter hat Querdrähte 1 und Längsdrähte 2, die einander kreuzend angeordnet sind. An den Kreuzungsstellen 3 sind die Drähte 1, 2 miteinander verschweißt. Die Drähte 1, 2 bilden Maschen 4, die je nach Gestaltung des Drahtgitters rechteckigen oder quadratischen Umriss haben können. Mehrere solcher Drahtgitter werden zu Drahtkörben, den sogenannten Gabionen, in bekannter Weise miteinander verbunden. Die Drahtgitter können unterschiedliche Abmessungen haben, vorzugsweise 50 cm x 50 cm bis 300 cm x 100 cm. Die Größe der Drahtgitter richtet sich nach dem jeweiligen Einsatzfall. Auch die Maschenweiten der einzelnen Drahtgitter können unterschiedlich sein. So beträgt beispielsweise die Maschenweite 10 cm x 10 cm, 5 cm x 10 cm und dergleichen. Die Drähte 1, 2 können unterschiedliche Durchmesser haben, die im Bereich zwischen beispielsweise 3,5 mm und 6 mm liegen. Je nach Drahtstärke haben die Drähte 1, 2 unterschiedliche Zugfestigkeiten. So kann beispielsweise ein Draht mit einem Durchmesser von 3,5 mm eine Zugfestigkeit im Bereich zwischen etwa 450 und 550 N/mm² haben. Bei einer Drahtstärke von 5,0 mm kann die Zugfestigkeit beispielsweise zwischen 600 und 750 N/mm² liegen.

Innerhalb des Drahtgitters können die Drähte 1, 2 gleiche Stärke haben. Es ist auch möglich, für die Längs- oder die Querdrähte unterschiedliche Durchmesser zu verwenden. Schließlich können auch die Durchmesser innerhalb der Längs- und/oder der Querdrähte variieren.

Mit den aus den Drahtgittern hergestellten Drahtkörben können unterschiedliche Projekte gebildet werden. So können aus den Drahtkörben Lärmschutzwände, Böschungssicherungen, Mauern, Verkleidungen, Fassadenvorbauten und dergleichen erstellt werden.

Die Drähte 1, 2 bestehen aus einem Kern aus Stahl, auf den eine Ummantelung aufgebracht ist. Sie besteht aus einer Legierung von Zink, Aluminium und Magnesium. Der Zinkanteil in der Legierung liegt zwischen etwa 91 und und Magnesium. Der Zinkanteil in der Legierung liegt zwischen etwa 91 und 98 Gew.-%, der Anteil an Aluminium zwischen etwa 5 und 1 Gew.-%, und der Anteil an Magnesium zwischen etwa 0,1 und 4 Gew.-%. Der geringe Magnesiumanteil beeinträchtigt die Schweißbarkeit der Drähte 1, 2 an den Kreuzungspunkten 3 nicht. Nach der Punktschweißung an den Kreuzungsstellen 3 bleibt der Korrosionsschutz voll erhalten.

Darüber hinaus wird durch diese Legierungszusammensetzung eine hohe Korrosionsbeständigkeit der Drähte 1, 2 erreicht. Das Drahtgitter erreicht bei einem Salzsprühnebeltest nach DIN 50 021 SS eine Standzeit von mehr als 3.000 Stunden. Dadurch eignet sich ein solches Drahtgitter hervorragend für den Außeneinsatz, selbst unter verschärften Bedingungen.

Bei einer bevorzugten Legierungszusammensetzung liegt der Anteil an Zink bei etwa 92 bis 98 Gew.-%, der Aluminiumanteil bei etwa 5 bis 1 Gew.-% und der Magnesiumanteil bei etwa 0,1 bis 3 Gew.-%. Eine solche Legierung kann problemlos in bekannter Weise auf den Stahldraht aufgebracht werden.

Besonders günstige Ergebnisse werden erzielt, wenn der Zinkanteil in der Legierung zwischen etwa 94,1 und 96,7 Gew.-%, der Aluminiumanteil zwischen etwa 5 und 3 Gew.-% und der Magnesiumanteil zwischen etwa 0,3 und 0,9 Gew.-% liegt.

Mit der beschriebenen Legierung als Ummantelung des Stahlkerns der Drähte 1, 2 wird ein hoher Korrosionsschutz bei hoher Langzeitbeständigkeit erreicht. Die Drähte 1, 2 weisen eine hohe Resistenz gegen Säuren und Laugen auf. Insbesondere aber schützt die Legierung geschweißte Stellen des Drahtgitters vor Korrosion.

Um die Beschichtung auf den Stahlkern der Drähte 1, 2 aufzubringen, wird der Stahlkern im Durchlaufverfahren mit der beschriebenen Legierung beschichtet. Anschließend werden die Drähte 1, 2 einander kreuzend angeordnet und an den Kreuzungsstellen 3 mittels elektrischem Punktschweißen miteinander verbunden.

Die Legierungsauflage auf den Drähten 1, 2 liegt zwischen etwa 250 und 450 g/m² was einer Schichtdicke zwischen etwa 35 µm und etwa 65 µm entspricht. Diese Schichtdicke ist einerseits so gering, dass die Drähte 1, 2, wenn erforderlich, problemlos gebogen werden können, ohne dass die Gefahr besteht, dass die Beschichtung reißt oder abspringt. Andererseits ist die Beschichtung so dick, dass die hohe Korrosionsbeständigkeit gewährleistet ist.

Je nach Einsatz des Drahtgitters können der Legierung noch Additive in geringen Mengen zugesetzt werden, beispielsweise Silizium in einem Gewichtsanteil von weniger als 0,1 Gew.-%. Dieses Additiv trägt dazu bei, dass die Gefahr des Aufreißens oder Abspringens der Beschichtung beim Biegen der Drähte 1, 2 verringert ist und die Beschichtung zuverlässig auf dem Stahlkern haftet.

## Patentansprüche

1. Drahtgitter mit Querdrähten (1) und Längsdrähten (2), die einander kreuzend angeordnet, an den Kreuzungsstellen (3) miteinander verschweißt sind und Maschen (4) bilden, wobei die Querdrähte (1) und die Längsdrähte (2) aus einem Gitterdraht mit einem Stahlkern bestehen, der mit einer Beschichtung versehen ist, die aus einer Legierung besteht, die aus Zink, Aluminium und Magnesium besteht, wobei der Zinkanteil zwischen 91 und 98 Gew.-%, der Aluminiumanteil zwischen 5 und 1 Gew.-% und der Magnesiumanteil zwischen 0,1 und 4 Gew.-% liegt, wobei das Drahtgitter bei einem Salzsprühnebeltest nach DIN 50 021 SS eine Standzeit von mehr als 3000 Stunden aufweist.

2. Drahtgitter nach Anspruch 1,
**dadurch gekennzeichnet, dass** der Zinkanteil zwischen 92 und 98 Gew.-%, der Aluminiumanteil zwischen 5 und 1 Gew.-% und der Magnesiumanteil zwischen 0,1 und 3 Gew.-% liegt.

3. Drahtgitter nach Anspruch 1 oder 2,
**dadurch gekennzeichnet, dass** der Zinkanteil zwischen 94,1 und 96,7 Gew.-%, der Aluminiumanteil zwischen 5 und 3 Gew.-% und der Magnesiumanteil zwischen 0,3 und 0,9 Gew.-% liegt.

4. Drahtgitter nach einem der Ansprüche 1 bis 3,
**dadurch gekennzeichnet, dass** der Gitterdraht (1, 2) einen Durchmesser zwischen 3,5 mm und 6 mm aufweist.

5. Drahtgitter nach einem der Ansprüche 1 bis 4,
**dadurch gekennzeichnet, dass** die Zugfestigkeit des Gitterdrahtes (1, 2) zwischen 400 und 750 N/mm² liegt.

6. Drahtgitter nach einem der Ansprüche 1 bis 5,
**dadurch gekennzeichnet, dass** die Legierung in einer Auflage zwischen 250 und 450 g/m² auf den Stahlkern aufgebracht ist.

7. Drahtgitter nach einem der Ansprüche 1 bis 6,
**dadurch gekennzeichnet, dass** die Beschichtung eine Dicke zwischen 35 µm und 65 µm aufweist.

## Claims

1. A wire mesh with transverse wires (1) and longitudinal wires (2), which intersect each other, are welded together at the intersections (3) and forms meshes (4), wherein the transverse wires (1) and longitudinal wires (2) consist of a grid wire having a steel core, which is provided with a coating comprised of an alloy made up of zinc, aluminum and magnesium, wherein the zinc percentage lies between 91 % and 98 %, the aluminum percentage lies between 5 % and 1 %, and the magnesium percentage lies between 0.1 % and 4 %, wherein the wire grid exhibits a service life exceeding 3,000 hours in a salt spray mist test performed according to DIN 50 021 SS.

2. The wire mesh according to claim 1, **characterized in that** the zinc percentage lies between 92 % and 98 %, the aluminum percentage lies between 5 % and 1 %, and the magnesium percentage lies between 0.1 % and 3 %.

3. The wire mesh according to claim 1 or 2, **characterized in that** the zinc percentage lies between 94.1 % and 96.7 %, the aluminum percentage lies between 5 % and 3 %, and the magnesium percentage lies between 0.3 % and 0.9 %.

4. The wire mesh according to one of claims 1 to 3, **characterized in that** the grid wire (1, 2) exhibits a diameter of between 3.5 mm and 6 mm.

5. The wire mesh according to one of claims 1 to 4, **characterized in that** the tensile strength of the grid wire (1, 2) lies between 400 and 750 N/mm².

6. The wire mesh according to one of claims 1 to 5, **characterized in that** the alloy is applied to the steel core at a coating weight of between 250 and 450 g_{/}m².

7. The wire mesh according to one of claims 1 to 6, **characterized in that** the coating exhibits a thickness of between 35 µm and 65 µm.

## Revendications

1. Treillis de fils avec des fils métalliques transversaux (1) et des fils métalliques longitudinaux (2) qui sont placés en se croisant, soudés les uns aux autres aux points de croisement (3) et qui forment des mailles (4), les fils métalliques transversaux (1) et les fils métalliques longitudinaux (2) étant constitués d'un fil de fer avec une âme en acier qui est munie d'un revêtement qui est constitué d'un alliage qui est constitué de zinc, d'aluminium et de magnésium, la part en zinc se situant entre 91 % et 98 % en poids, la part en aluminium entre 5 % et 1 % en poids et la part en magnésium entre 0,1 % et 4 % en poids, lors d'un test au brouillard salin selon DIN 50 021 SS, le fil de fer faisant preuve d'une durée de vie supérieure à 3000 heures.

2. Treillis de fils selon la revendication 1,
**caractérisé en ce que** la part en zinc se situe entre 92 % et 98 % en poids, la part en aluminium entre 5 % et 1 % en poids et la part en magnésium entre 0,1 % et 3 % en poids.

3. Treillis de fils selon la revendication 1 ou la revendication 2,
**caractérisé en ce que** la part en zinc se situe entre 94,1 % et 96,7 % en poids, la part en aluminium entre 5 % et 3 % en poids et la part en magnésium entre 0,3 % et 0,9 % en poids.

4. Treillis de fils selon l'une quelconque des revendications 1 à 3,
**caractérisé en ce que** le fil de fer (1, 2) a un diamètre compris entre 3,5 et 6 mm.

5. Treillis de fils selon l'une quelconque des revendications 1 à 4,
**caractérisé en ce que** la résistance à la traction du fil de fer (1, 2) se situe entre 400 et 750 N/mm².

6. Treillis de fils selon l'une quelconque des revendications 1 à 5,
**caractérisé en ce que** l'alliage est appliqué en une couche comprise entre 250 et 450 g/m² sur l'âme en acier.

7. Treillis de fils selon l'une quelconque des revendications 1 à 6,
**caractérisé en ce que** le revêtement présente une épaisseur comprise entre 35 µm et 65 µm.
